# EUROPÄISCHE PATENTANMELDUNG

(11) **EP 3 623 259 A1**
(43) Veröffentlichungstag der Anmeldung: **18.03.2020**
(21) Anmeldenummer: 19196952.6
(22) Anmeldetag: 12.09.2019
(51) Int. Cl.: B62B 3/14

(54) **BEFESTIGUNGSVORRICHTUNG FÜR EINE KINDERAUFNAHME**

(30) Priorität: 14.09.2018 DE 102018122559
(71) Anmelder: Kleffmann, Nadine, 44869 Bochum (DE)
(72) Erfinder: Kleffmann, Nadine, 44869 Bochum (DE)
(74) Vertreter: Patentanwälte Bals & Vogel

(57) **Zusammenfassung**

Die Erfindung betrifft eine Befestigungsvorrichtung (100) für eine Kinderaufnahme (300), welche eine Aufnahme (101), die an einem Randabschnitt (201) eines Behältnisses für Waren (200) befestigbar ist, sowie ein Flächenteil (102), auf das die Kinderaufnahme (300) absetzbar ist, aufweist. Ferner betrifft die Erfindung ein Behältnis für Waren (200), bei dem eine erfindungsgemäße Befestigungsvorrichtung (100) mit dem zumindest einen Randabschnitt (201) verbunden ist.

## Beschreibung

Die vorliegende Erfindung betrifft eine Befestigungsvorrichtung für eine Kinderaufnahme sowie ein Behältnis für Waren.

Kinder, insbesondere Kleinkinder, welche noch nicht oder lediglich eingeschränkt laufen können, werden von ihren Aufsichtspersonen in entsprechende Kinderaufnahmen abgelegt, in denen die Kinder sitzen oder liegen können. Diese Kinderaufnahmen sind in einer Vielzahl von Varianten erhältlich, wobei einige mit einem Sitz in einem Kraftfahrzeug oder einem Kinderwagen kombiniert werden können. In manchen Situationen, beispielsweise wenn ein Einkauf getätigt werden soll, muss von der Aufsichtsperson ein entsprechendes Behältnis für Waren geführt werden, wobei gleichzeitig das Kind in der Kinderaufnahme weiter getragen werden muss. Die Kinderaufnahme in einem Aufnahmebereich für Waren innerhalb des Behältnisses für Waren abzusetzen bietet den Nachteil, dass weniger Waren in den Aufnahmebereich aufgenommen werden können. Darüber hinaus kann bei einigen Behältnissen für Waren, wenn diese beispielsweise besonders tief sind, der Zugang zum Kind nur eingeschränkt möglich sein. Weiterhin kann es vorkommen, dass die Kinderaufnahme innerhalb des Behältnisses für Waren verrutscht, falls das Behältnis für Waren beschleunigt wird.

Es ist eine Aufgabe der vorliegenden Erfindung, die beschriebenen Nachteile zumindest teilweise zu beheben. Insbesondere ist es eine Aufgabe der vorliegenden Erfindung, eine einfache und bequeme Möglichkeit zu schaffen, eine Kinderaufnahme an ein Behältnis für Waren zu befestigen und die Sicherheit zu erhöhen.

Die voranstehende Aufgabe wird gelöst durch eine Befestigungsvorrichtung mit den Merkmalen des Anspruchs 1 und ein Behältnis für Waren mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Befestigungsvorrichtung beschrieben sind, selbstverständlich auch im Zusammenhang mit dem erfindungsgemäßen Behältnis für Waren und jeweils umgekehrt, sodass bezüglich der Offenbarung zu den einzelnen Erfindungsaspekten stets wechselseitig Bezug genommen wird bzw. werden kann.

Die erfindungsgemäße Befestigungsvorrichtung für eine Kinderaufnahme weist wenigstens eine Aufnahme, welche an einem Randabschnitt eines Behältnisses für Waren, insbesondere eines Einkaufswagens, befestigbar ist, auf. Weiterhin weist die Befestigungsvorrichtung ein Flächenteil, auf das die Kinderaufnahme absetzbar ist, welches mit der wenigstens einen Aufnahme verbindbar ist, auf. Dabei ist eine der Kinderaufnahme entsprechende Gewichtskraft vom Flächenteil über die wenigstens eine Aufnahme auf den Randabschnitt übertragbar.

Mit anderen Worten wird durch die Befestigungsvorrichtung die Kinderaufnahme vom Flächenteil gehalten, welcher wiederum an der Aufnahme befestigbar ist, wodurch letztlich die Kinderaufnahme vom Randabschnitt des Behältnisses für Waren getragen wird. Ein Behältnis für Waren weist üblicherweise einen Aufnahmebereich für Waren auf, welcher durch zumindest einen Randabschnitt begrenzt ist. Die Erfindung bezieht sich auf solche Behältnisse für Waren, bei dem die Waren im Wesentlichen von oben in den Aufnahmebereich für Waren abgelegt werden, und der Randabschnitt des Behältnisses für Waren den Aufnahmebereich für Waren nach oben hin begrenzt. Ein Beispiel für solche Behältnisse für Waren sind Einkaufswagen, wie sie in Supermärkten verwendet werden. Die erfindungsgemäße Befestigungsvorrichtung bietet den Vorteil, dass die Kinderaufnahme nicht in das Behältnis für Waren gestellt werden muss, und somit weniger Platz in dem Aufnahmebereich für Waren einnimmt. Weitere Vorteile der erfindungsgemäßen Befestigungsvorrichtung sind die sichere Halterung der Kinderaufnahme sowie eine mögliche Platzierung im Sichtbereich der Person, welche das Behältnis be- oder entlädt. Bei dem Randabschnitt des Behältnisses für Waren kann es sich um eine der oberen Kanten eines Einkaufswagens handeln. Bei der Kinderaufnahme kann es sich um eine Babyschale handeln, die insbesondere für Kinder zwischen dem zweiten und dritten Lebensjahr geeignet ist. Das Flächenteil kann als eine einstückige und/oder materialeinheitliche Fläche ausgebildet sein. Dies bietet den Vorteil, dass das Flächenteil besonders stabil ist. Das Flächenteil kann auch mehrere Flächen und/oder Ausnehmungen aufweisen. Dies bietet den Vorteil, dass das Gewicht der Vorrichtung reduziert wird.

Erfindungsgemäß kann ebenfalls vorgesehen sein, dass das Flächenteil mit der Aufnahme fest verbunden ist. Dies ermöglicht eine besonders einfache und schnelle Anbringung der Befestigungsvorrichtung an das Behältnis für Waren. Insbesondere kann das Flächenteil mit der Aufnahme vernäht sein, wobei das Aufnahmeteil insbesondere aus einem Kunststoff gefertigt und das Flächenteil als Netz oder Stoffbahn ausgebildet sein kann. Dies bietet den Vorteil, dass eine besonders einfache und schnelle Anbringung der Befestigungsvorrichtung an das Behältnis für Waren erreicht werden kann, wobei weiterhin ein geringes Gewicht erreicht wird.

Es kann von Vorteil sein, wenn das Flächenteil ferner zumindest eine Spannvorrichtung, insbesondere zumindest einen Spanngurt aufweist, um eine effektive Größe des Flächenteils einzustellen. Mit anderen Worten kann das Flächenteil zumindest eine Spannvorrichtung umfassen, wie diese beispielsweise von Rucksackgurten bekannt ist. Dadurch kann das Flächenteil in seiner Größe variabel eingestellt und damit optimal an die Größe und Position der Kinderschale angepasst werden. Insbesondere wenn über die Verbindung zwischen dem Flächenteil und der Aufnahme keine Einstellbarkeit der Größe des Flächenteils gegeben ist lässt sich durch die Spannvorrichtung dennoch eine optimale Anpassung an die Kinderschale erreichen. Weiter kann vorgesehen sein, dass zwei Spanngurte am Flächenteil vorgehen sind, welche entlang, insbesondere einer Längsseite, des Flächenteils verlaufen. Hierdurch ergibt sich eine besonders gute Einstellbarkeit, insbesondere über die Längsseite, des Flächenteils.

Weiterhin kann vorgesehen sein, dass das Flächenteil, insbesondere in einem Randbereich des Flächenteils, ein Zugelement, insbesondere ein Seil, aufweist, welches von einem Benutzer der Befestigungsvorrichtung gezogen oder entspannt werden kann, um die Form des Flächenteils zu verändern, insbesondere um den Randbereich des Flächenteils vorhangartig zu komprimieren. Hierdurch kann das Flächenteil besonders gut an die Kinderaufnahme angepasst werden. Mit anderen Worten kann das Flächenteil einen Kordelzug aufweisen, mit dem die Größe des Flächenteils angepasst werden kann. Es kann vorgesehen sein, dass das Zugelement tabaksbeutelnahtähnlich im Flächenelement verläuft oder in einer Umschlagsfalte angeordnet ist.

Es kann vorgesehen sein, dass die Kinderaufnahme quer zur Längsrichtung des Behältnisses für Waren durch das Flächenteil aufnehmbar ist. Dies bietet den Vorteil, dass der Zugang zum Aufnahmebereich für Waren besonders gut zugänglich bleibt. Alternativ oder zusätzlich kann auch vorgesehen sein, dass die Kinderaufnahme entlang der Längsrichtung des Behältnisses für Waren durch das Flächenteil aufnehmbar ist. Dies bietet den Vorteil, dass die Person, die das Behältnis für Waren bewegt, das in der Kinderaufnahme befindliche Kind im Blickfeld hat. Es kann vorgesehen sein, dass die Aufnahme einen Form- und/oder Kraft- und/oder Stoffschluss mit dem Flächenteil und/oder dem Randabschnitt eines Behältnisses für Waren bildet.

Weiterhin kann vorgesehen sein, dass eine zweite Aufnahme an einem weiteren, vom ersten Randabschnitt beabstandeten, Randabschnitt des Behältnisses für Waren befestigbar ist, wobei die zweite Aufnahme ebenfalls mit dem Flächenteil verbindbar ist. Dies bietet den Vorteil, dass die Kraft auf einen größeren Teil des Randabschnitts verteilt werden kann, wodurch weiterhin eine erhöhte Stabilität gegeben ist. Es kann ebenfalls vorgesehen sein, dass die zweite Aufnahme zwar dazu geeignet ist, eine der Kinderaufnahme entsprechende Gewichtskraft vom Flächenteil über die wenigstens eine Aufnahme auf den Randabschnitt zu übertragen, wobei schon die erste Aufnahme ebenfalls hierzu geeignet ist, wodurch eine Redundanz der zweiten Aufnahme gegeben ist. Dies bietet den Vorteil, dass die Sicherheit bei einem Ausfall einer der Aufnahmen erhöht ist. Auch bei der zweiten Aufnahme kann vorgesehen sein, dass diese fest mit dem Flächenteil verbunden ist. Dies bietet den Vorteil, dass die Befestigungsvorrichtung besonders schnell und einfach an die Randabschnitte eines Behältnisses für Waren angebracht werden kann. Alternativ dazu kann auch vorgesehen sein, dass lediglich eine von mehreren Aufnahmen fest mit dem Flächenteil verbunden ist. Dies bietet den Vorteil, dass zunächst eine Aufnahme schnell und einfach mit einem Randabschnitt des Behältnisses für Waren verbunden werden kann und dann die andere oder mehrere andere Aufnahmen an den Randabschnitt angebracht werden können, um dann das Flächenteil mit der einen anderen oder weiteren anderen Aufnahmen zu verbinden. Hierdurch ergibt sich eine größere Variabilität bei der Befestigung. Natürlich können im Rahmen der Erfindung auch dritte oder noch mehr Aufnahmen vorgesehen sein, um die Stabilität der Vorrichtung weiter zu erhöhen.

Es kann von Vorteil sein, wenn bei einer erfindungsgemäßen Befestigungsvorrichtung die zweite Aufnahme an einem den ersten Randabschnitt gegenüberliegenden und/oder im Wesentlichen orthogonal liegenden Randabschnitt des Behältnisses für Waren befestigbar ist. Wenn sich die zwei Aufnahmen gegenüberliegen, bietet dies den Vorteil, dass eine besonders hohe Stabilität durch die Befestigungsvorrichtung gewährleistet ist. Wird die zweite Aufnahme hingegen in einem annähernd rechten Winkel zur ersten Aufnahme positioniert, bietet dies den Vorteil, dass eine größere freie Fläche zum Einlegen von Waren in das Behältnis für Waren geschaffen wird. Es ist ebenfalls denkbar, dass die zweite Aufnahme der wenigstens einen Aufnahme an einem den ersten Randabschnitt gegenüberliegenden und im Wesentlichen orthogonal liegenden Randabschnitt des Behältnisses für Waren befestigbar ist. Auch dies bietet den Vorteil einer besonders hohen Stabilität.

Es kann ebenfalls vorgesehen sein, dass das Flächenteil flexibel, insbesondere als Netz, ausgebildet ist, sodass die Kinderaufnahme zumindest teilweise vom Flächenteil umschlossen wird, wenn die Kinderaufnahme auf das Flächenteil abgesetzt wird. Durch die zumindest teilweise Umschließung wird der Vorteil erreicht, dass die Kinderaufnahme sicher in der Befestigungsvorrichtung gehalten wird, auch wenn das Behältnis für Waren beschleunigt wird. Eine Ausgestaltung des Flächenteils als Netz bietet den Vorteil, dass die Befestigungsvorrichtung dadurch besonders leicht ist und ein kleines Packmaß aufweist. Es kann ebenfalls vorgesehen sein, dass das Flächenteil aus einem flexiblen Kunststoff ausgebildet ist. Dies bietet den Vorteil, dass die Befestigungsvorrichtung dadurch besonders leicht und günstig herstellbar ist. Weiterhin kann vorgesehen sein, dass das Flächenteil einen verstärkten Rand aufweist. Dies bietet den Vorteil, dass das Flächenteil sicherer mit der zumindest einen Aufnahme verbindbar ist und außerdem die Handhabung für den Benutzer erleichtert wird.

Im Rahmen der Erfindung kann vornehmlich auch vorgesehen sein, dass die wenigstens eine Aufnahme als u-förmiges Profil ausgebildet ist, wobei die Aufnahme eine Ausbuchtung aufweist, in welche der Randabschnitt aufnehmbar ist. Dies bietet den Vorteil, dass die wenigstens eine Aufnahme besonders leicht an dem Randabschnitt anbringbar ist. Bei einer als u-förmiges Profil ausgebildeten Aufnahme weist diese sowohl eine Seite auf, die von dem Aufnahmebereich des Behältnisses für Waren wegweist als auch eine Seite, die zum Aufnahmebereich des Behältnisses für Waren hinweist. Es kann vorgesehen sein, dass das u-förmige Profil der Aufnahme einen Formschluss mit dem Randabschnitt des Behältnisses für Waren bildet, sodass durch diesen Formschluss allein die der Kinderaufnahme entsprechende Gewichtskraft vom Flächenteil über die wenigstens eine Aufnahme auf den Randabschnitt übertragbar ist. Dies bietet den Vorteil, dass die Aufnahme besonders einfach an den Randabschnitt angebracht werden kann. Es kann jedoch auch vorgesehen sein, dass die Aufnahme über weitere Befestigungsmittel verfügt, um mit dem Randabschnitt verbunden zu werden. Dies bietet den Vorteil, dass eine besonders sichere Befestigung ermöglicht wird.

Vorteilhaft kann bei einer erfindungsgemäßen Vorrichtung vorgesehen sein, dass die wenigstens eine Aufnahme mit dem Randabschnitt des Behältnisses für Waren mit einem Clips und/oder Rastmechanismus und/oder magnetisch verbindbar ist. Eine Clipsverbindung bietet den Vorteil, dass diese besonders schnell und einfach hergestellt werden kann und wieder lösbar ist. Ein Rastmechanismus bietet den Vorteil, dass bei diesem eine Verbindung schnell hergestellt werden kann und besonders sicher ist. Eine magnetische Verbindung bietet ebenfalls den Vorteil, dass diese besonders einfach herstellbar und auch wieder zu lösen ist. Eine Kombination der genannten Varianten bietet darüber hinaus den Vorteil, dass die Befestigung besonders sicher ist. Der Randabschnitt des Behältnisses für Waren kann dabei beispielsweise lediglich aus einem Drahtgitter bestehen, wie es bei Einkaufswagen üblich ist. Dann kann die Clipsverbindung darin bestehen, dass wenigstens einer, vorzugsweise auch mehrere, Drähte des Drahtgitters des Einkaufswagens zumindest teilweise umschlossen werden. Bei einem entsprechenden Rastmechanismus kann dann vorgesehen sein, dass die Aufnahme ein Rastmittel aufweist, welches einen Widerstand gegen das Lösen der Verbindung bildet. Bei einer magnetischen Verbindung ist sowohl denkbar, dass der Magnet der Aufnahme so mit dem Drahtgitter des Einkaufswagens wechselwirkt, dass hieraus eine Kraft resultiert, die dem Trennen der Verbindung zwischen Aufnahme und dem Einkaufswagen entgegenwirkt als auch dass an der Aufnahme zwei miteinander wechselwirkende Magneten angebracht sind, welche zumindest einen Draht des Drahtgitters des Einkaufswagens so umschließen, dass diese einem Lösen der Verbindung zwischen Aufnahme und dem Behältnis für Waren entgegenwirken.

Es ist des Weiteren bei einer erfindungsgemäßen Vorrichtung denkbar, dass ein Sicherheitselement vorgesehen ist, welches an einem ersten Ende mit der wenigstens einen Aufnahme und/oder mit dem Flächenelement verbunden ist, und an einem zweiten Ende mit einem Randabschnitt und/oder dem Flächenelement verbindbar ist, wobei das Sicherheitselement über die Kinderaufnahme führbar ist. Mit anderen Worten kann ein Element zur Sicherung der Befestigungsvorrichtung vorgesehen sein, welches zwei Enden aufweist, wobei eines der zwei Enden mit der wenigstens einen Aufnahme und/oder mit dem Flächenelement verbunden ist, und mit dem anderen Ende mit dem Randabschnitt und/oder dem Flächenelement verbindbar ist. Das Sicherheitselement kann dabei so über die Kinderaufnahme geführt werden, dass effektiv verhindert wird, dass diese sich in Bewegung, insbesondere eine Rotationsbewegung versetzen kann, wodurch die Kinderaufnahme und/oder das Kind aus der Befestigungsvorrichtung herausfallen könnte. Das Sicherheitselement bietet demnach den Vorteil, dass ein zusätzlicher Schutz insbesondere bei besonders starken Beschleunigungen erreicht wird und eine Bewegung, insbesondere eine Drehung der Kinderaufnahme effektiv verhindert wird. Es kann vorgesehen sein, dass das Sicherheitselement als flexibles Band ausgebildet ist. Dies bietet den Vorteil, dass auch bei unterschiedlichen Behältnissen für Waren. Das Sicherheitselement schnell und einfach angebracht werden kann. Weiterhin kann vorgesehen sein, dass das Sicherheitselement einen Verstellmechanismus aufweist, mit dem die Länge dem Behältnis für Waren und dessen geometrischen Ausmaßen angepasst werden kann. Dies bietet den Vorteil, dass auch bei unterschiedlich großen Behältnissen für Waren eine besonders sichere Verwendung des Sicherheitselementes ermöglicht wird.

Im Rahmen der Erfindung kann auch vorgesehen sein, dass die wenigstens eine Aufnahme zwei Teile aufweist, welche miteinander durch zumindest ein Gelenk, insbesondere ein Scharnier, verbunden sind. Mit anderen Worten kann die wenigstens eine Aufnahme klappbar ausgebildet sein. Dies bietet den Vorteil, dass die Befestigungsvorrichtung dadurch ein geringeres Packmaß aufweist. Selbstverständlich kann ebenfalls vorgesehen sein, dass die wenigstens eine Aufnahme drei oder mehr Teile aufweist, welche jeweils miteinander durch zumindest ein Gelenk verbunden sind. Alternativ oder in Ergänzung dazu kann ebenfalls vorgesehen sein, dass die einzelnen Teile zusammensteckbar ausgebildet sind, wodurch ebenfalls ein geringeres Packmaß erreicht werden kann.

Es ist ebenfalls bei einer erfindungsgemäßen Vorrichtung denkbar, dass zumindest ein Befestigungsmittel vorgesehen ist, welches am Flächenelement und/oder an der wenigstens einen Aufnahme angeordnet und mit dem Randabschnitt und/oder dem Flächenelement verbindbar ist. Dies bietet den Vorteil, dass die Verbindung zwischen Flächenelement und/oder der wenigstens einen Aufnahme mit dem Randabschnitt und/oder dem Flächenelement eine erhöhte Sicherheit aufweist. Wenn das Befestigungsmittel das Flächenelement mit dem Randabschnitt verbindet, bietet dies ebenfalls den Vorteil, dass dadurch eine Redundanz gegenüber der Aufnahme geschaffen wird, sodass eine erhöhte Sicherheit auch dann gewährleistet ist, falls die Aufnahme sich beispielsweise löst oder bricht. Es kann vorgesehen sein, dass die Befestigungsmittel auf der von dem Behältnis für Waren wegweisenden Seite angeordnet sind. Dies bietet den Vorteil, dass diese Seite für den Benutzer besonders leicht zugänglich ist und so eine erleichterte Handhabung der Befestigungsvorrichtung gewährleistet ist. Als Befestigungsmittel kann ein Haken, insbesondere ein Karabinerhaken vorgesehen sein. Ein Haken bietet den Vorteil, dass dieser besonders leicht wieder lösbar ist, was eine erleichterte Handhabung bedeutet. Ein Karabinerhaken bietet darüber hinaus den Vorteil, dass dieser eine erhöhte Sicherheit gegenüber einem versehentlichen Lösen der Verbindung darstellt. Ebenfalls kann vorgesehen sein, dass mehrere Befestigungsmittel, insbesondere an jeder Ecke des Flächenelementes und der wenigstens einen Aufnahme vorgesehen sind. Dies bietet den Vorteil, dass die Stabilität und Sicherheit erhöht ist. Ebenfalls kann vorgesehen sein, dass mehrere Reihen von Befestigungsmitteln übereinander angeordnet sind. Dies bietet den Vorteil, dass das Flächenelement und/oder die wenigstens eine Aufnahme variabel mit dem Randabschnitt von unterschiedlich großen Behältnissen für Waren verbindbar sind. Es kann ebenfalls vorgesehen sein, dass mehrere Spalten von Befestigungsmitteln, also nebeneinander angeordnete Befestigungsmittel, vorgesehen sind. Dadurch wird die Sicherheit erhöht. Es kann vorgesehen sein, dass ein Abstand zwischen den Befestigungsmitteln vorgesehen ist, welcher zwischen 1 cm und 10 cm, vorzugsweise zwischen 5 cm und 2 cm beträgt. Dies bietet den Vorteil, dass bei handelsüblichen Einkaufswagen eine besonders sichere Verbindung gewährleistet werden kann. Es kann weiter vorgesehen sein, dass für die Befestigungsmittel am Flächenelement und/oder an der wenigstens einen Aufnahme entsprechende Gegenbefestigungsmittel, insbesondere Ösen, vorgesehen sind. Dabei kann weiter vorgesehen sein, dass die Gegenbefestigungsmittel Verstärkungen aufweisen, um ein Ausreißen auch bei verstärkter Belastung zu vermeiden.

Gemäß einem weiteren Aspekt der Erfindung ist ein Behältnis für Waren, insbesondere ein Einkaufswagen, mit zumindest einem Randabschnitt, der dadurch gekennzeichnet ist, dass eine Befestigungsvorrichtung für eine Kinderaufnahme nach einem der Ansprüche 1 bis 9 mit dem zumindest einen Randabschnitt verbunden ist, beansprucht. Ein derartiges Behältnis für Waren erleichtert den Einkauf von Waren, wenn eine Kinderaufnahme mitgeführt wird.

Gemäß einem weiteren Aspekt der Erfindung ist eine Kinderaufnahme, insbesondere eine Babyschale, mit einer Befestigungsvorrichtung nach einem der Ansprüche 1 bis 9, welche an der Kinderaufnahme angeordnet und mit dieser verbunden ist, beansprucht. Eine derartige Kinderaufnahme bietet die Vorteile der erfindungsgemäßen Befestigungsvorrichtung, wobei diese nicht gesondert mitgeführt werden muss. Dabei kann vorgesehen sein, dass die Befestigungsvorrichtung klappbar ausgeführt ist, sodass diese in eine Gebrauchsstellung, in der die Befestigungsvorrichtung an einem Behältnis für Waren befestigbar ist, und in eine Klappstellung, in der die Befestigungsvorrichtung weniger Platz einnimmt, überführt werden kann. Weiterhin kann eine Schutzstellung vorgesehen sein, in der das Flächenteil derart über die Kinderaufnahme verfahren wird, dass ein Sonnenschutz für das Kind erreicht wird.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: eine schematische Ansicht eines Behältnisses für Waren mit einem Ausführungsbeispiel einer Befestigungsvorrichtung, bei dem die Kinderaufnahme nicht mit der Befestigungsvorrichtung verbunden ist,
- Figur 2: eine schematische Darstellung eines Behältnisses für Waren und einer Befestigungsvorrichtung, bei dem die Kinderaufnahme in die Befestigungsvorrichtung eingelegt und mit einem Sicherheitselement gesichert ist, und
- Figur 3: eine schematische Darstellung der Aufnahme sowie des Flächenelementes.
- Figur 4: eine weitere schematische Darstellung der Aufnahme sowie des Flächenelementes
- Figur 5: eine weitere schematische Darstellung der Aufnahme sowie des Flächenelementes mit Gurtelementen

In den nachfolgenden Figuren werden für die gleichen technischen Merkmale auch von unterschiedlichen Ausführungsbeispielen die identischen Bezugszeichen verwendet.

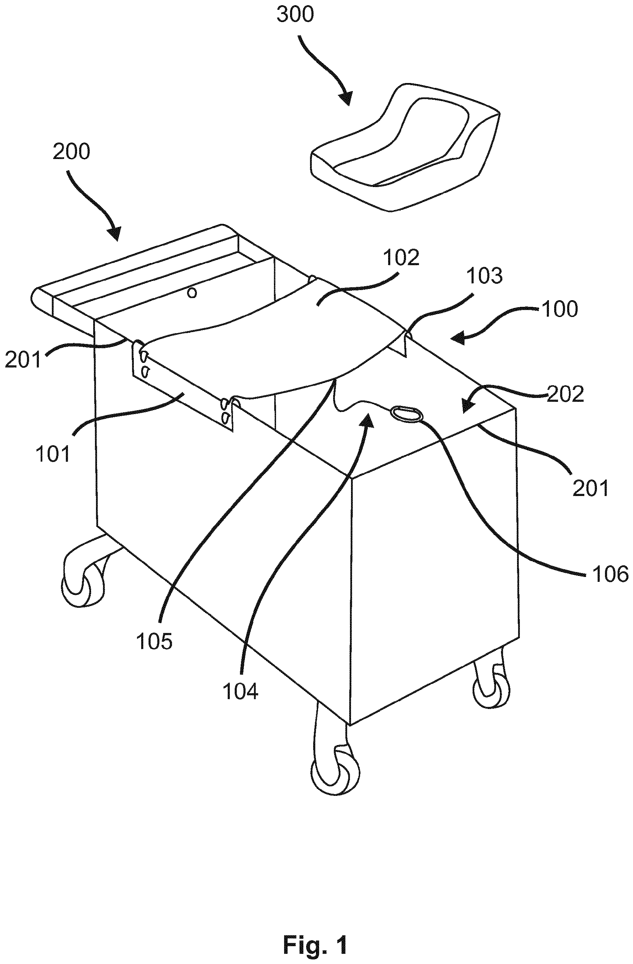

Die Figur 1 zeigt schematisch ein Behältnis für Waren 200, welches in Anlehnung an einen Einkaufswagen 200 dargestellt ist. Dieser weist sowohl einen Aufnahmebereich für Waren 202 als auch mehrere Randabschnitte 201 auf. Die Randabschnitte 201, welche hier den Aufnahmebereich für Waren 202 als Kanten der Seitenflächen des Aufnahmebereichs für Waren 202 begrenzen, bilden einen Auflagepunkt für die Befestigungsvorrichtung 100. Die Befestigungsvorrichtung 100 für eine Kinderaufnahme 300, welche in der Figur 1 schematisch als Babyschale dargestellt ist, weist wenigstens eine Aufnahme 101 auf, welche an einem Randabschnitt 201 des Behältnisses für Waren 200 befestigbar ist. Weiterhin weist die Befestigungsvorrichtung 100 ein Flächenteil 102 auf, auf das die Kinderaufnahme 300 absetzbar ist. Das Flächenteil 102 ist mit der wenigstens einen Aufnahme 101 verbindbar, wobei eine der Kinderaufnahme 300 entsprechende Gewichtskraft vom Flächenteil 102 über die wenigstens eine Aufnahme 101 auf den Randabschnitt 201 übertragbar ist. Im hier dargestellten Ausführungsbeispiel ist weiterhin eine zweite Aufnahme 103 vorhanden, welche an einem weiteren, vom ersten Randabschnitt 201 beabstandeten, Randabschnitt 201 des Behältnisses für Waren 200 befestigbar ist. Dabei ist die zweite Aufnahme 103 ebenfalls mit dem Flächenteil 102 verbindbar.

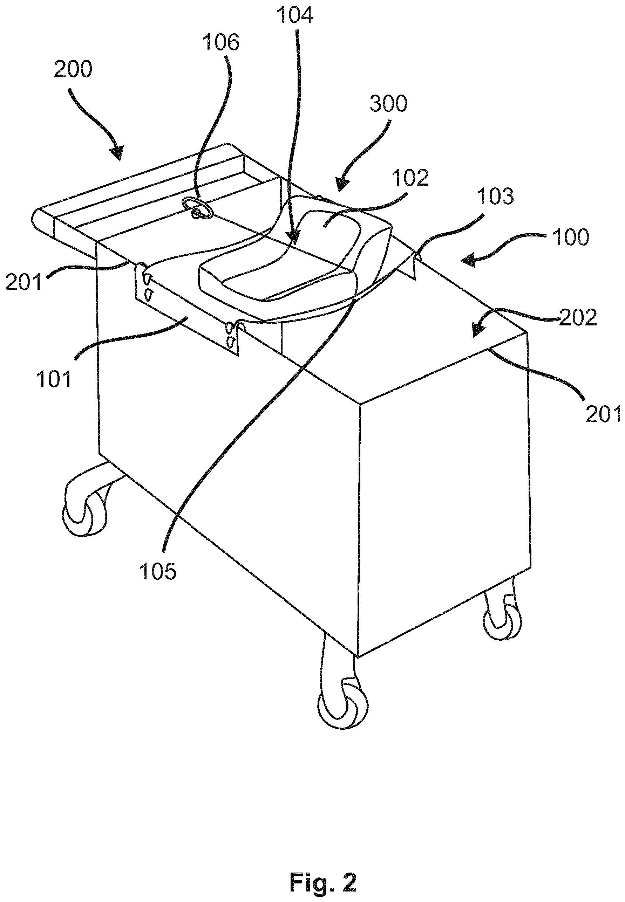

Im gezeigten Ausführungsbeispiel der Figur 1 bzw. 2 liegt die zweite Aufnahme 103 an einem dem ersten Randabschnitt 201 gegenüberliegenden Randabschnitt 201. Die zweite Aufnahme 103 könnte jedoch auch an einem im Wesentlichen orthogonal liegenden Randabschnitt 201 des Behältnisses für Waren 200 befestigt werden. Es wäre ebenfalls denkbar, dass die wenigstens eine Aufnahme 101 mit mehreren Randabschnitten 201, insbesondere im Wesentlichen orthogonal zueinanderliegenden Randabschnitten 201, verbindbar ist.

In der Figur 2 ist dargestellt, dass das Flächenteil 102 flexibel ausgebildet ist, sodass die Kinderaufnahme 300 zumindest teilweise vom Flächenteil 102 umschlossen wird, wenn die Kinderaufnahme 300 auf das Flächenteil 102 abgesetzt wird. Die Flexibilität kann beispielsweise dadurch erreicht werden, dass das Flächenteil 102 als Netz ausgebildet ist. Die flexible Ausführung des Flächenteils 102 bietet den Vorteil, dass die Kinderaufnahme 300 umschlossen wird und ein besonders kleines Packmaß erreichbar ist. Es kann weiter vorgesehen sein, dass das Flächenteil 102 einen verstärkten Rand aufweist, was eine besonders einfache Handhabung ermöglicht und eine sichere Befestigung der Kinderaufnahme 300 ermöglicht.

In den Figuren 1 und 2 ist darüber hinaus ein Sicherheitselement 104 gezeigt, welches an der Befestigungsvorrichtung 100 vorgesehen ist. Das Sicherheitselement 104 weist ein erstes Ende 105 auf, welches im dargestellten Ausführungsbeispiel mit dem Flächenelement 102 verbunden ist. Das erste Ende 105 kann jedoch auch mit der wenigstens einen Aufnahme 101, 103 verbunden sein. Das zweite Ende 106 kann, wie in Figur 2 gezeigt, mit dem Randabschnitt 201 verbunden werden. Dabei wird das Sicherheitselement 104 über die Kinderaufnahme 300 geführt, sodass die Kinderaufnahme 300 gegen eine Bewegung, insbesondere eine Rotation, geschützt ist. Es kann vorgesehen sein, dass das Behältnis für Waren 200 eine entsprechende Öffnung aufweist, sodass das Sicherheitselement 104 mit der entsprechenden Öffnung verbunden werden kann. Dies ist insbesondere dann regelmäßig der Fall, wenn es sich beim Behältnis für Waren 200 um einen Einkaufswagen 200 handelt, welcher in der Regel aus einem Drahtgitter mit vielen Öffnungen besteht. Alternativ dazu ist es möglich, dass das Sicherheitselement 104 mit dem zweiten Ende 106 mit dem Flächenelement 102 verbunden wird, wobei das Sicherheitselement entweder nur über die Kinderaufnahme 300 oder über die Kinderaufnahme 300 und über einen Randabschnitt 201 zurück zum Flächenelement 102 führbar ist. Das zweite Ende 106 des Sicherheitselementes 104 kann dabei ein Befestigungsmittel 108 aufweisen, was im dargestellten Beispiel als Karabinerhaken 108 ausgebildet ist. Alternativ dazu kann beispielsweise auch eine Clips- und/oder Rastverbindung vorgesehen sein, wobei sowohl das Flächenelement 102 als auch der Randabschnitt 201 des Behältnisses für Waren 200 entsprechende Gegenbefestigungsmittel aufweisen können.

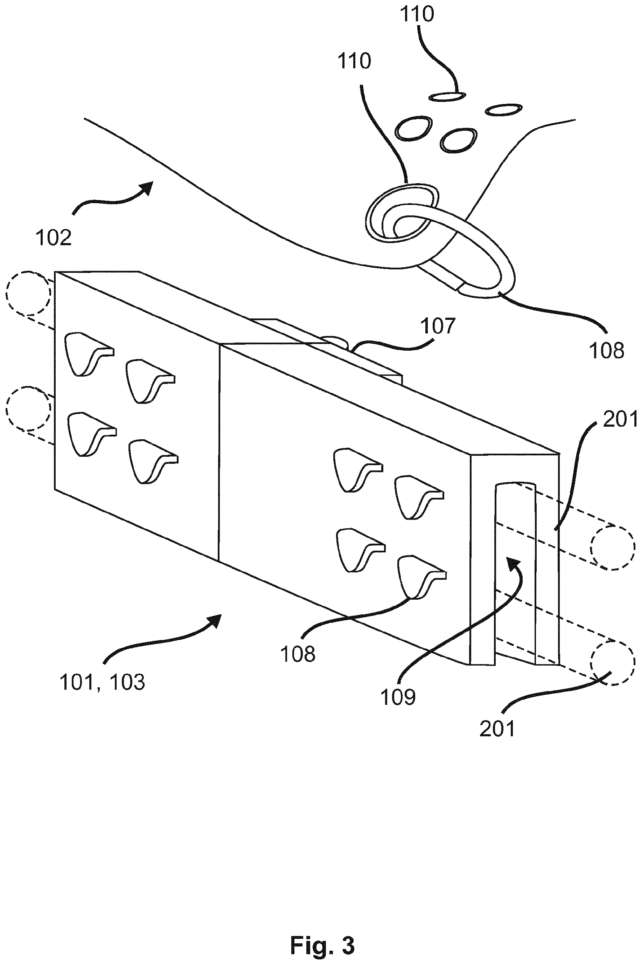

In der Figur 3 ist eine vergrößerte Darstellung der Aufnahme 101 sowie des Flächenelementes 102 gezeigt. Ebenfalls gezeigt ist ein Randabschnitt 201 als Drähte, welche als gestrichelte Linien dargestellt sind.

Die Aufnahme 101, 103 ist in der Figur 3 als u-förmiges Profil ausgebildet, wobei die Aufnahme 101, 103 eine Ausbuchtung 109 aufweist, in welche der Randabschnitt 201 aufnehmbar ist.

Die wenigstens eine Aufnahme 101, 103 kann mit dem Randabschnitt 201 des Behältnisses für Waren 200 mit einem Clips und/oder Rastmechanismus und/oder magnetisch verbindbar sein.

Im in der Figur 3 gezeigten Ausführungsbeispiel hat die wenigstens eine Aufnahme 101, 103 zwei Teile, welche miteinander durch ein Gelenk 107, welches als Scharnier 107 dargestellt ist, verbunden sind. Dies bietet den Vorteil, dass das Packmaß der Befestigungsvorrichtung 100 verringert ist. Alternativ dazu oder in Ergänzung wäre es auch möglich, dass mehrere Gelenke 107 oder zusammensteckbare Teile vorgesehen sind. Auch dies erlaubt eine Einsparung in Bezug auf das Packmaß der Befestigungsvorrichtung 100.

Ebenfalls in der Figur 3 dargestellt sind Befestigungsmittel 108, welche an der wenigstens einen Aufnahme 101, 103 angeordnet sind. Diese ermöglichen eine Verbindung des Flächenelementes 102 an der Aufnahme 101, 103 durch entsprechende Gegenbefestigungsmittel, welche in der Figur 3 als Ösen 110 dargestellt sind. Selbstverständlich kann ebenso vorgesehen sein, dass die Befestigungsmittel am Flächenelement 102 und die Gegenbefestigungsmittel an der Aufnahme 101, 103 angebracht sind. Die Befestigungsmittel 108 können ebenfalls dazu dienen, die Aufnahme 101, 103 und/oder das Flächenelement 102 mit dem Randabschnitt 201 zu verbinden. Beispielhaft ist dafür in der Figur 3 ein Karabiner 108 dargestellt, welcher um einen der Drähte 201 geclipst werden könnte. Ebenfalls wäre beispielsweise denkbar, die wenigstens eine Aufnahme 101, 103 durch Befestigungsmittel 108, wie etwa Schrauben, Nieten oder Haken mit dem Randabschnitt 201 zu verbinden.

Wie in der Figur 3 dargestellt ist, können die Befestigungsmittel sowohl in mehreren Zeilen als auch Spalten an der Aufnahme 101, 103 und/oder dem Flächenelement 102 angeordnet sein. Hierdurch ergibt sich eine erhöhte Sicherheit durch entsprechende Redundanz. Ebenfalls kann vorgesehen sein, dass die Befestigungsmittel an jeder Ecke des Flächenelementes 102 bzw. der Aufnahme 101, 103 angeordnet sind.

Das u-förmige Profil kann so ausgebildet sein, dass beide Schenkel des Us gleichlang ausgebildet sind, insbesondere dass die Schenkel eine Länge zwischen 15 cm und 5 cm, bevorzugt 10 cm aufweisen, sodass bei handelsüblichen Einkaufswagen 200 der Randabschnitt 201, zumindest ein Draht 201 von der u-förmigen Aufnahme 101, 103 umfasst wird.

Es kann ebenfalls vorgesehen sein, dass die Befestigungsmittel 108 auf der dem Aufnahmebereich für Waren 202 abgewandten Seite angeordnet sind. Dies bietet den Vorteil, dass der Benutzer die Befestigungsmittel 108 besonders gut erreichen kann, was eine leichte Befestigung des Flächenelementes 102 an der Aufnahme 101, 103 ermöglicht. Das Scharnier 107 kann vorteilhafterweise auf der dem Aufnahmebereich für Waren 202 zugewandten Seite der Aufnahme 101, 103 angebracht sein, um zu vermeiden, dass das Scharnier 107 eine unerwünschte Wechselwirkung mit dem Flächenelement 102 eingeht.

Die Figuren 1 und 2 zeigen auch schematisch ein Behältnis für Waren 200, mit zumindest einem Randabschnitt 201, bei dem die Befestigungsvorrichtung 100 für eine Kinderaufnahme 300 nach einem der Ansprüche 1 bis 9 ausgebildet ist, und zumindest mit einem Randabschnitt 201 verbunden ist.

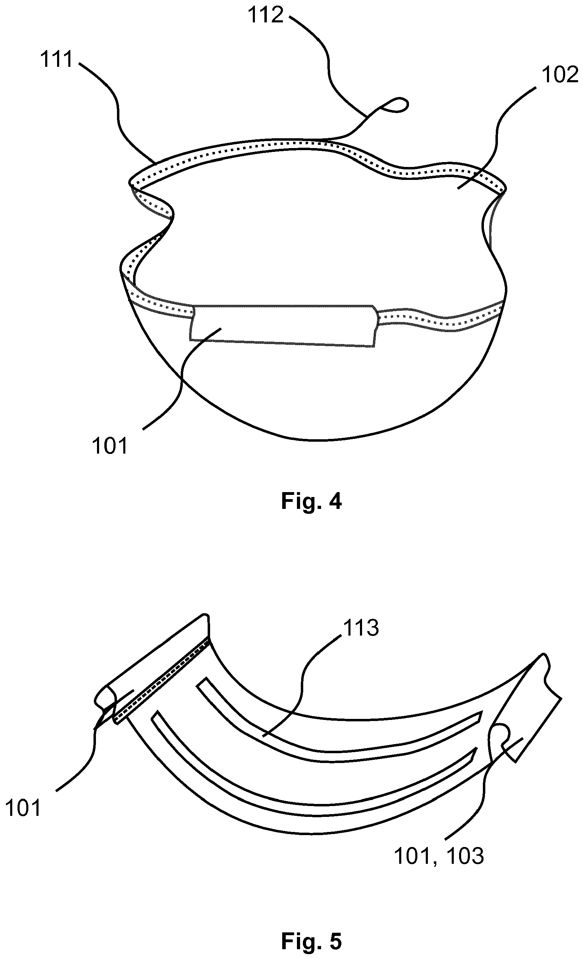

Die Figur 4 zeigt eine Variante des Flächenteils (102), welches in einem Randbereich des Flächenteils (111), ein Zugelement (112), hier dargestellt als ein Seil (112), aufweist, welches von einem Benutzer der Befestigungsvorrichtung (100) gezogen oder entspannt werden kann, wodurch die Form des Flächenteils (102) veränderbar ist.

Die Figur 5 zeigt eine Variante des das Flächenteils (102), welche eine zumindest eine Spannvorrichtung (113), hier mit zumindest einen Spanngurt (113) aufweist, wodurch eine effektive Größe des Flächenteils (102) einstellbar ist.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Befestigungsvorrichtung
- 101: Aufnahme
- 102: Flächenteil
- 103: zweite Aufnahme
- 104: Sicherungselement
- 105: erstes Ende
- 106: zweites Ende
- 107: Scharnier
- 108: Haken
- 109: Ausnehmung der Aufnahme
- 110: Ausnehmung des Flächenteils
- 111: Randbereich des Flächenteils
- 112: Zugelement
- 113: Spannvorrichtung

- 200: Behältnis für Waren
- 201: Randabschnitt
- 202: Aufnahmebereich für Waren

- 300: Kinderaufnahme

## Patentansprüche

1. Befestigungsvorrichtung (100) für eine Kinderaufnahme (300),
aufweisend wenigstens eine Aufnahme (101), welche an einem Randabschnitt (201) eines Behältnisses für Waren (200), insbesondere eines Einkaufswagens (200), befestigbar ist,
sowie ein Flächenteil (102), auf das die Kinderaufnahme (300) absetzbar ist, welches mit der wenigstens einen Aufnahme (101) verbindbar ist, wobei eine der Kinderaufnahme (300) entsprechende Gewichtskraft vom Flächenteil (102) über die wenigstens eine Aufnahme (101) auf den Randabschnitt (201) übertragbar ist.

2. Befestigungsvorrichtung (100) nach Anspruch 1,
**dadurch gekennzeichnet,**
**dass** eine zweite Aufnahme (103) an einem weiteren, vom ersten Randabschnitt (201) beabstandeten, Randabschnitt (201) des Behältnisses für Waren (200) befestigbar ist, wobei die zweite Aufnahme (103) ebenfalls mit dem Flächenteil (102) verbindbar ist.

3. Befestigungsvorrichtung (100) nach Anspruch 2,
**dadurch gekennzeichnet,**
**dass** die zweite Aufnahme (103) an einem dem ersten Randabschnitt (201) gegenüberliegenden und/oder im Wesentlichen orthogonal liegenden Randabschnitt (201) des Behältnisses für Waren (200) befestigbar ist.

4. Befestigungsvorrichtung (100) nach einem der vorhergehenden Ansprüche,
**dadurch gekennzeichnet,**
**dass** das Flächenteil (102) flexibel, insbesondere als Netz, ausgebildet ist, sodass die Kinderaufnahme (300) zumindest teilweise vom Flächenteil (102) umschlossen wird, wenn die Kinderaufnahme (300) auf das Flächenteil (102) abgesetzt wird.

5. Befestigungsvorrichtung (100) nach einem der vorhergehenden Ansprüche,
**dadurch gekennzeichnet,**
**dass** das Flächenteil (100) mit der wenigstens eine Aufnahme (101) und/oder der zweiten Aufnahme (103) fest verbunden, insbesondere vernäht, ist.

6. Befestigungsvorrichtung (100) nach einem der vorhergehenden Ansprüche,
**dadurch gekennzeichnet,**
**dass** die wenigstens eine Aufnahme (101, 103) als U-förmiges Profil ausgebildet ist, aufweisend eine Ausbuchtung (109), in welche der Randabschnitt (201) aufnehmbar ist.

7. Befestigungsvorrichtung (100) nach einem der vorhergehenden Ansprüche,
**dadurch gekennzeichnet,**
**dass** die wenigstens eine Aufnahme (101, 103) mit dem Randabschnitt (201) des Behältnisses für Waren (200) mit einem Clips- und/oder Rastmechanismus und/oder magnetisch verbindbar ist.

8. Befestigungsvorrichtung (100) nach einem der vorhergehenden Ansprüche,
**dadurch gekennzeichnet,**
**dass** ein Sicherheitselement (104) vorgesehen ist, welches an einem ersten Ende (105) mit der wenigstens einen Aufnahme (101, 103) und/oder mit dem Flächenelement (102) verbunden ist, und an einem zweiten Ende (106) mit dem Randabschnitt (201) und/oder dem Flächenelement (102) verbindbar ist, wobei das Sicherheitselement (104) über die Kinderaufnahme (300) führbar ist.

9. Befestigungsvorrichtung (100) nach einem der vorhergehenden Ansprüche,
**dadurch gekennzeichnet,**
**dass** das Flächenteil (102) ferner zumindest eine Spannvorrichtung (113), insbesondere zumindest einen Spanngurt (113) aufweist, wodurch eine effektive Größe des Flächenteils (102) einstellbar ist.

10. Befestigungsvorrichtung (100) nach einem der vorhergehenden Ansprüche,
**dadurch gekennzeichnet,**
**dass** das Flächenteil (102), insbesondere in einem Randbereich des Flächenteils (111), ein Zugelement (112), insbesondere ein Seil (112), aufweist, welches von einem Benutzer der Befestigungsvorrichtung (100) gezogen oder entspannt werden kann, wodurch die Form des Flächenteils (102) veränderbar ist.

11. Befestigungsvorrichtung (100) nach einem der vorhergehenden Ansprüche,
**dadurch gekennzeichnet,**
**dass** die wenigstens eine Aufnahme (101, 103) zwei Teile aufweist, welche miteinander durch zumindest ein Gelenk (107), insbesondere ein Scharnier (107), verbunden sind.

12. Befestigungsvorrichtung (100) nach einem der vorhergehenden Ansprüche,
**dadurch gekennzeichnet,**
**dass** zumindest ein Befestigungsmittel (108), vorgesehen ist, welcher am Flächenelement (102) und/oder an der wenigstens einen Aufnahme (101, 103) angeordnet und mit dem Randabschnitt (201) verbindbar ist.

13. Behältnis für Waren (200), insbesondere ein Einkaufswagen (200), mit zumindest einem Randabschnitt (201),
**dadurch gekennzeichnet,**
**dass** eine Befestigungsvorrichtung (100) für eine Kinderaufnahme (300) nach einem der Ansprüche 1 bis 9 mit dem zumindest einen Randabschnitt (201) verbunden ist.

14. Kinderaufnahme (300), insbesondere eine Babyschale, mit einer Befestigungsvorrichtung (100) nach einem der Ansprüche 1 bis 12, welche an der Kinderaufnahme (100) angeordnet und mit dieser verbunden ist.
